# EUROPEAN PATENT APPLICATION

(11) **EP 2 463 160 A1**
(43) Date of publication of application: **13.06.2012**
(21) Application number: 11380019.7
(22) Date of filing: 10.03.2011
(51) Int. Cl.: B60R 22/18, B60R 22/24, E06C 7/18

(54) **Security system for ambulance staff**

(30) Priority: 12.03.2010 ES 201000352
(71) Applicant: Carignano, Esteban Andres, 35110 Santa Lucia (ES); Secondino, Gerardo Daniel, 35110 Santa Lucia (ES)
(72) Inventor: Carignano, Esteban Andres, 35110 Santa Lucia (ES); Secondino, Gerardo Daniel, 35110 Santa Lucia (ES)
(74) Representative: Falcon Morales, Alejandro

(57) **Abstract**

SAFETY DEVICE FOR AMBULANCE MEDICAL PERSONNEL, comprising a guide (2) fixed to the interior roof of the vehicle and a slide carriage (11) with safety lines (25) attached by a harness to the medical personnel, with the existence of a brake system, which through vehicle collision or sudden braking is activated preventing the movement of the slide carriage (11). The guide (2) consists of two flat-bars, upper (3) and lower (4), with a central longitudinal slot (5) solidly joined by vertical segments (6) and incorporating a grooved rod (8) internally. The slide carriage (11) has wheels (12) which run along the lower flat-bar (4) and has an interior tube (14), passing through the grooved rod (8), featuring two lower openings (15), with the grooved rod (8) partially emerging to allow the locking of the brake plates (18), which hang, fixed to the slide carriage (11), protruding below the slot (5) of the lower flat-bar (4).

## Description

### OBJECT OF THE INVENTION

The invention, as expressed in the title of this specification, refers to a safety device for ambulance medical personnel.

More precisely, the object of the invention focuses on a safety device specially designed to serve as a securing element for ambulance medical personnel while performing emergency actions on the patient transferred, preventing the medical personnel from being injured or hit by hard elements in the interior of the ambulance or being thrown out of it; since medical personnel have to work standing over the patient, they are therefore not able to conveniently fasten seat belts, being said device also designed to allow such work to be performed with sufficient freedom of movement within the space of the ambulance.

### SCOPE OF THE INVENTION

The scope of the present invention falls within the technical sector of the industry dedicated to the manufacture of motor vehicle accessories, particularly ambulances.

### BACKGROUND OF THE INVENTION

As is known, during patient ambulance transfer, it is common that urgent actions be taken on the patient, which for whatever reason, cannot wait for their arrival at the hospital to which they are to be taken. In such cases, medical personnel attending the patient are forced to release their restraint and abandon their seats to stand and move around inside the ambulance cabin in response to emergency needs. This means that in the case of a collision or simply a sudden harsh or unforeseen braking, the medical staff are completely unprotected and at risk, and may themselves suffer cuts and bruises that may be more or less severe and would be desirably avoided.

This is thus the essential objective of this invention, on which it is noted that at present, and with respect to current technological developments, the applicant is not aware of any other safety device which presents such an application, nor that has the technical, structural and constitutive features similar to that which is advocated here; being the characteristic details which distinguish it, adequately contained in the final claims of the present specification.

### EXPLANATION OF THE INVENTION

Therefore, the safety device for ambulance medical personnel proposed by the invention is set to be a remarkable novelty in its specific field and with respect to current technological developments, whereby, through its implementation will undoubtedly successfully reach the ideal objectives previously mentioned.

In concrete terms, the device advocated consists essentially of a guide that is longitudinally fixed to the roof of the ambulance cabin and supports a slide carriage which, with straps, is attached to the medical personnel, allowing complete freedom of movement within the ambulance's assistance cabin.

Also, within the said guide there is a grooved rod which linked to said slide carriage, extends from one end to the other of the guide and constitutes the half anchor that locks the device's brake system, which consists of brake plates fitted with a spring and connected in a hook like way in the slide carriage, acting similarly to the system incorporated in safety belts; that is, with smooth movements the brake system does not activate and in the case of a collision or sudden braking, the brake system is triggered and locks onto the aforementioned grooved rod.

In turn, from these brake plates hang two lines that are fastened to a harness that the medical staff must wear to secure the shoulders and the pelvis.

It must be noted that in the case of emergency ambulances or the like, which require the presence of two medical staff, the possibility of placing two parallel and independent safety devices to secure both health workers, is contemplated.

The new safety device for ambulance medical personnel therefore presents innovative structural and constitutive features previously unknown for such purposes. These reasons linked to its practical utility endow the device with sufficient grounds for obtaining the privilege of exclusivity requested.

### DESCRIPTION OF THE DRAWINGS

To complement the description being made and in order to better help understand the characteristics of the invention, the present specification is accompanied, as an integral part of it, by a set of drawings in which for illustrative and non limiting purposes the following have been represented:

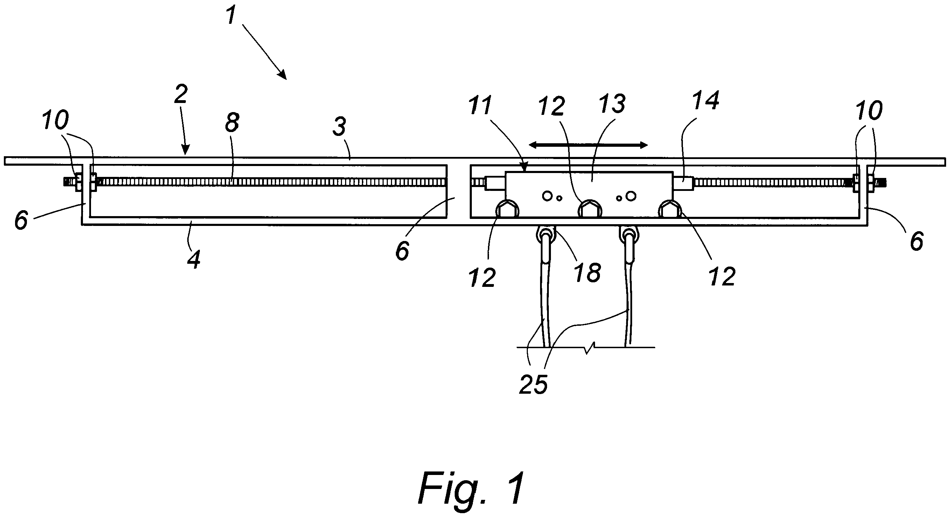

Figure 1.- Shows a schematic side view of the embodiment of the ambulance safety device for medical personnel (object of this invention), in which the main parts and components that comprise it can be seen, as well as its shape and layout.
Figure 2.- Shows a perspective view of part of the guide that comprises the device of the invention, where one can appreciate its shape and the way the grooved rod is incorporated in its interior, which serves as a brake for the brake plates.
Figures 3 and 4.- Shows front and side views of the slide carriage respectively, where one can appreciate its external shape.
Figure 5.- Shows a sectional view, a vertical cross section of the slide carriage in its operational position, i.e., once situated in the guide and with the brake plates incorporated, where one can appreciate its internal shape and how it is connected to the other elements of the device.
Figure 6.- Shows the detail of one of the brake plates, which is represented with the spring shown separately, to ease its identification.

### PREFERRED EMBODIMENT OF THE INVENTION

In view of the aforementioned figures, and with respect to the numbering adopted, one can observe in them the preferred embodiment of the invention, whose main constituent parts and elements are described below in detail.

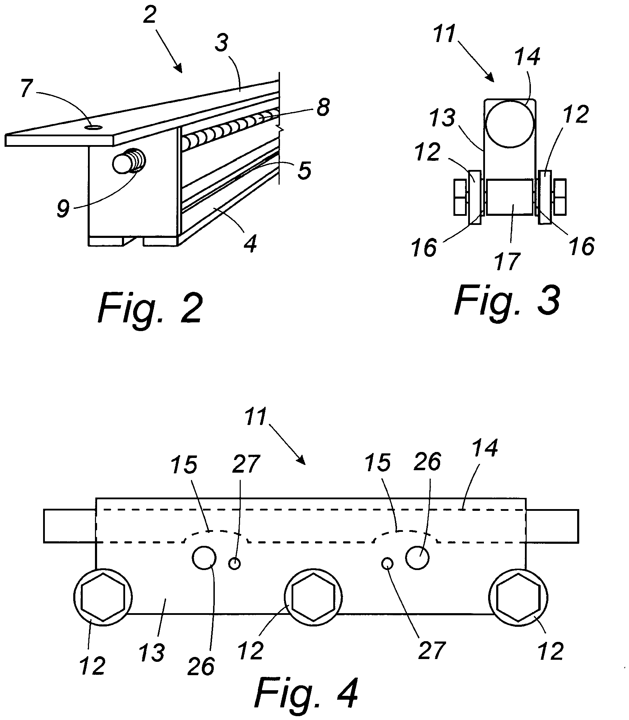

Thus, as shown in these figures, the device (1) in question comprises a guide (2), destined to be fixed longitudinally to the roof of the ambulance cabin, which, as can be seen in Figure 2 is constituted by two parallel steel flat-bars, an upper one (3) and a lower one (4), of which the lower flat-bar (4) has a longitudinal centreline slot (5) that runs along its entire length, with said flat-bars (3, 4) solidly joined together by two or more vertical segments (6).

For its part, the upper flat-bar (3) has several perforations (7) that will be the anchor points of the guide (2) to the ambulance body roll bars, with the dimensions of this guide (2) adjusted to the ambulance cabin, characteristically about 140 cm in length.

Within said guide (2), the device features a grooved rod (8) through its entire length, which is fixed to the guide (2) by its insertion in the provided openings (9) found in the vertical segments (6) at either end of it (since the grooved rod is practically the same length as the guide), being fixed to the guide (2) by means of their respective pairs of nuts (10) inserted in their threaded ends.

Continuing with the invention, the device has a slide carriage (11) that has several pairs of wheels (12) which run along the interior of the guide (2), from one end to the other, and rest on the two sides of the lower flat-bar (4).

This slide carriage (11), as shown in Figures 3 and 4 also comprises a rectangular shaped metal plate housing (13) with lower inverted U-sections to which are coupled the already mentioned pairs of wheels (12), and whose upper interior section has a tube (14) slightly longer than the housing (13), through which passes the aforementioned grooved rod (8) and which has two lower openings (15), which define three closed tube sections (one central and two lateral); openings through which the cited grooved rod (8) partially emerges, to allow for the locking of the brake system, as explained below.

One must note that the slide carriage (11) preferably has three pairs of rolling wheels, where each pair of wheels is joined together with a washered nut; existing between the wheels and metal plate housing (13) some short lipped washers (16) (small external diameter washers), to allow rotation of the wheel and a central separation sleeve (17).

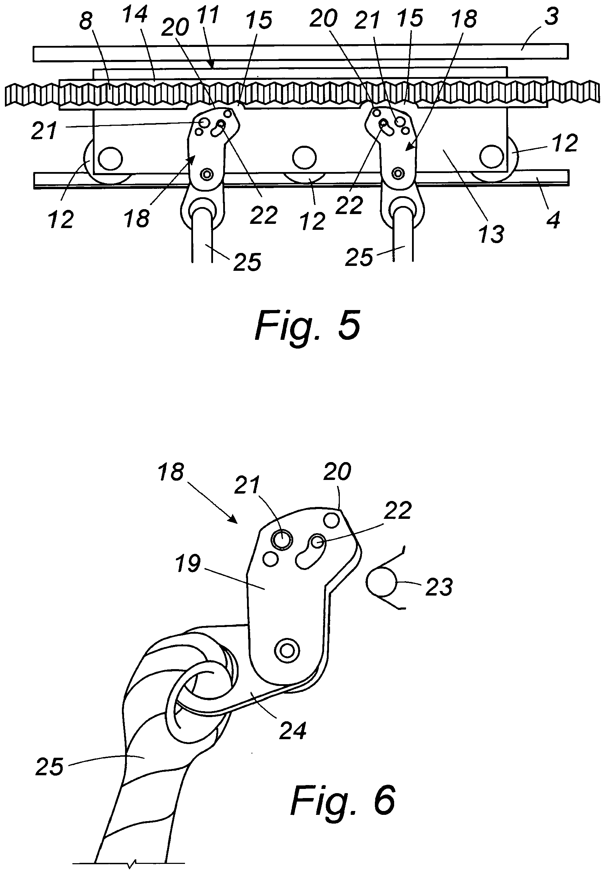

Inside the slide carriage (11) there are also two separate articulated brake plates (18), which fixed to the slide carriage (11), hang protruding from the slot (5) of the lower flat-bar (4) of the guide (2), acting in a similar way to the system found in safety belts, and consisting, as shown in Figure 6, of two similar pieces (19) shaped in a hook like way, which have a toothed upper section (20), a central axis (21) and a rotational pivot (22) internally connected to a spring (23) (separately represented in cited Figure 6), coupled articulately to the bottom of the two pieces (19) a ring (24) to which is fixed a security line (25).

Thus, as shown in Figure 5, two such brake plates (18) are joined by a central axis (21) into holes (26) provided for that purpose in the central part of the of the slide carriage (11) housing (13), and they exist alongside other smaller holes (27) for the rotational pivot (22), constituting the anchor half that locks the brake system of the device, in such a way that with smooth movements the brake plates (18) do not activate and allow the free movement of the slide carriage (11) from one end to the other of the guide (2), but in a collision or sudden braking, they activate and prevent displacement by locking the toothed section (20) in the grooved rod (5), to which they have access through the openings (15) of the tube (14) from where they emerge, and under which are located such brake plates (18), inside the housing (13) of the slide carriage (11).

Moreover, the security lines (25) that hang from these brake plates (18), go on to secure a harness (not shown), which the medical personnel must wear and, which preferably, will be of the type that secures the shoulders and pelvis.

Thus, the functioning of the device (1) is as follows: the medical staff must wear the full body harness, pelvis-thorax, which has some rings to which the hooks of the security lines (25) that hang from the brake plates (18) of the device, are attached.

The brake plates (18) are attached to the slide carriage (11) of the system, which allows the anteroposterior movement (longitudinal displacement) within the ambulance's assistance cabin of the medical staff, without them bodily touching either the front nor the rear of the cabin, but regulating the length of the security line so that the personnel can touch with their hands each accessible corner of the assistance cabin.

When there is a sudden braking or collision, the medical personnel lose their balance and the body tends to continue the movement it had (inertia); this type of involuntary movement is sudden and harsh, and it is precisely this that triggers the braking system, preventing the medical staff from being propelled towards the anterior or posterior walls of the cabin.

To summarise then, the device (1) advocated is suitable as a fastening element for ambulance medical personnel whilst performing emergency actions on the patient being transferred, enabling the work to take place with sufficient freedom of movement within the ambulance space, where the device is distinguished by the fact that it comprises at least one guide (2) that attached lengthwise to the interior of the ambulance cabin roof, supports at least one slide carriage (11) which, with security lines (25) are attached to the medical staff via a harness that is worn, and where there exists a braking system consisting of brake plates (18) equipped with a spring (23) which are connected in a hook like way in the slide carriage (11), whose braking system acts similarly to the safety belts system; that is to say, with smooth movements it does not activate and in the case of a collision or sudden braking it is triggered off, thus preventing the movement of the device.

Having sufficiently described the nature of the present invention as well as how to implement the device, it is not considered necessary to extend the explanation any further, since any expert on the matter will understand its scope and the advantages derived from it.

It is also noted that, in its essence, the device described by way of example may be implemented in other embodiments that differ in detail, and which will be equally protected by the claim, provided that its fundamental principle is not altered, changed or modified.

## Claims

1. SAFETY DEVICE FOR AMBULANCE MEDICAL PERSONNEL, applicable as a securing element for ambulance medical staff while performing emergency actions on the patient transferred, enabling them to work with sufficient freedom of movement within the ambulance space,and **characterized by** the fact that it comprises at least one guide (2) of dimensions tailored to the ambulance cabin, fixed longitudinally to the roof, supported by at least one slide carriage (11) that, by means of security lines (25) is attached to the medial personnel via a harness of the type secured by the shoulders and pelvis, and there is a braking system consisting of brake plates (18) connected in a similar way to hooks in the slide carriage (11), where the brake system does not activate with gentle movements, but in a collision or sudden braking, is triggered, preventing the movement of the carriage (11) through the guide (2).

2. SAFETY DEVICE FOR AMBULANCE MEDICAL PERSONNEL, according to claim 1, is **characterized by** the fact that the guide (2) consists of two parallel flat-bars, an upper one (3) and a lower one (4), of which the lower flat-bar (4) has a longitudinal centreline slot (5) that runs along its entire length, with said flat-bars (3, 4) solidly joined together by two or more vertical segments (6); within the guide (2) there is a grooved rod (8) from end to end, which has almost the same length as the guide (2); the slide carriage (11) is equipped with several pairs of wheels (12) that run along the inside of the guide (2) supported on both sides of the said lower flat-bar (4); and the upper section of the slide carriage (11) has an interior tube (14), passing through the grooved rod (8), featuring two lower openings (15), through which the grooved rod (8) partially emerges to allow for the locking of the brake plates (18), which hang, attached to the slide carriage (11), protruding through the slot (5) of the lower flat-bar (5) of the guide (2).

3. SAFETY DEVICE FOR AMBULANCE MEDICAL PERSONNEL, according to claims 1 and 2, is **characterized by** the fact that the brake plates (18) consist of two similar pieces (19) shaped in a hook like way, that have an upper toothed section (20), a central axis (21) and a rotational pivot (22) internally connected to a spring (23) and coupled articulately to the lower end of the two similar pieces (19) by a ring (24) to which a security line (25) is fixed.

4. SAFETY DEVICE FOR AMBULANCE MEDICAL PERSONNEL, according to claims 1 to 3, is **characterized by** the fact that the slide carriage (11), comprises a rectangular shaped metal plate housing (13) with inverted U-sections at the bottom where the wheels (12) are coupled; and in said slide carriage (11) two of these mentioned brake plates (18) are coupled on the central axis (21) into holes (26) provided for the purpose in the central part of the housing (13), existing alongside them other smaller holes (27) for the rotational pivot (22).

5. SAFETY DEVICE FOR AMBULANCE MEDICAL PERSONNEL, according to claim 2, is **characterized by** the fact that the grooved rod (8) is fixed to the guide (2) inserted in holes (9) provided at the end of the vertical segments (6), and being fixed to these by means of their respective pairs of nuts (10) inserted in their threaded ends.

6. SAFETY DEVICE FOR AMBULANCE MEDICAL PERSONNEL, according to claim 4, is **characterized by** the fact that the slide carriage (11) has three pairs of wheels (12) rolling together. Each pair of wheels (12) is joined by a screw and washered nuts, existing between the wheels and metal plate housing (13), short lipped washers (16) (small external diameter washers) to allow for the rotation of the wheel, and a central separation sleeve (17).
